# EUROPÄISCHE PATENTSCHRIFT

(11) **EP 1 438 527 B1**
(45) Veröffentlichungstag und Bekanntmachung des Hinweises auf die Patenterteilung: **20.07.2005**
(21) Anmeldenummer: 02716754.3
(22) Anmeldetag: 09.02.2002
(51) Int. Cl.: F16K 5/04, F15B 21/12, B05B 12/06

(54) **VORRICHTUNG ZUM ERZEUGEN EINES PULSIERENDEN FLUIDSTROMS**
DEVICE FOR GENERATING A PULSATING STREAM OF FLUID
DISPOSITIF GENERANT UN COURANT PULSE DE FLUIDE

(30) Priorität: 24.10.2001 DE 10151864
(43) Veröffentlichungstag der Anmeldung: 21.07.2004
(73) Patentinhaber: Dürr Ecoclean GmbH, 70794 Filderstadt (DE)
(72) Erfinder: KÄSKE, Egon, 52078 Aachen (DE)
(74) Vertreter: Hörner, Andreas
(86) Internationale Anmeldenummer: PCT/EP2002/001372
(87) Internationale Veröffentlichungsnummer: WO 2003/036144

(56) Entgegenhaltungen:
- DE-A- 3 627 328
- US-A- 2 879 797
- US-A- 3 314 643
- US-A- 3 937 252
- US-A- 4 649 955
- US-A- 4 802 508
- US-A- 5 148 946

## Beschreibung

Die vorliegende Erfindung betrifft eine Vorrichtung zum Erzeugen eines pulsierenden Fluidstroms, wobei der Fluidstrom ein Strom einer Flüssigkeit und/oder eines Gases sein kann.

Ein solcher pulsierender Fluidstrom kann mittels eines Ventils erzeugt werden, welches in einer von dem Fluid zu durchströmenden Leitung angeordnet ist und einen Durchgang durch das Ventil abwechselnd schließt und freigibt.

Die US-Patentschrift Nr. 3 937 252 offenbart eine Vorrichtung zum Erzeugen eines pulsierenden Fluidstroms mit den Merkmalen des Oberbegriffs von Anspruch 1. Bei dieser Vorrichtung erstrecken sich zwei Fluidauslässe senkrecht zur Achse des Fluideinlasses, und die Drehachse des Sperrelements ist parallel zur Achse des Fluideinlasses ausgerichtet.

Die US-Patentschrift Nr. 2 879 797 offenbart eine Vorrichtung zum Erzeugen eines pulsierenden Fluidstroms mit einem Fluideinlaß und einem Fluidauslaß, die sich längs gegeneinander versetzter Achsen erstrecken, und ein zwischen dem Fluideinlaß und dem Fluidauslaß angeordnetes, drehbares Sperrelement.

Die US-Patentschrift Nr. 4 649 955 offenbart eine Vorrichtung zum Erzeugen eines pulsierenden Fluidstroms, die einen Fluideinlaß, einen gegenüber dem Fluideinlaß in radialer Richtung versetzten Fluidauslaß und ein zwischen dem Fluideinlaß und dem Fluidauslaß angeordnetes, um eine parallel zum Fluidauslaß ausgerichtete Drehachse drehbares Sperrelement umfaßt.

Die US-Patentschrift Nr. 4 802 508 offenbart eine Vorrichtung zum zyklischen Umlenken eines Wasserstroms von einem Wassereinlaß zu einem von zwei Wasserauslässen. Die beiden Wasserauslässe erstrecken sich in einer zur Richtung des Wassereinlasses senkrechten Richtung. Ein Umlenkelement der Vorrichtung ist um eine im wesentlichen parallel zur Achse des Wassereinlasses ausgerichtete Drehachse drehbar.

Die US-Patentschrift Nr. 5 148 946 offenbart eine Vorrichtung zum Abgeben einer vorherbestimmten Fluidmenge, welche einen Fluideinlaß, einen senkrecht zur Achse des Fluideinlasses ausgerichteten Fluidauslaß und ein um eine parallel zum Fluidauslaß ausgerichtete Drehachse drehbares Sperrelement umfaßt.

Die US-Patentschrift Nr. 3 314 643 offenbart ein Drosselventil mit einem Ventilkörper, der mittels eines Schraubenschlüssels von einer Schließstellung in eine Offenstellung drehbar ist.

Der vorliegenden Erfindung liegt die Aufgabe zugrunde, eine Vorrichtung zum Erzeugen eines pulsierenden Fluidstroms zu schaffen, welche einfach aufgebaut und herstellbar ist und die Erzeugung eines mit vergleichsweise hoher Frequenz pulsierenden Fluidstroms ermöglicht.

Diese Aufgabe wird erfindungsgemäß durch eine Vorrichtung zum Erzeugen eines pulsierenden Fluidstroms nach Anspruch 1 gelöst.

Bei der erfindungsgemäßen Vorrichtung entspricht die Pulsationsfrequenz des erzeugten pulsierenden Fluidstroms dem Zweifachen der Drehfrequenz des Sperrelements. Die Pulsationsfrequenz des Fluidstroms läßt sich daher durch geeignete Wahl der Drehfrequenz des Sperrelements in einfacher Weise einstellen.

Bei einer bevorzugten Ausgestaltung der Erfindung ist vorgesehen, daß das Sperrelement als eine drehbar gelagerte Welle ausgebildet ist.

Ferner ist vorzugsweise vorgesehen, daß das Sperrelement einen im wesentlichen zylindrischen Sperrteil aufweist.

Um den Fluiddurchgang von dem Fluideinlaß zu dem Fluidauslaß zu ermöglichen, wenn sich die Vorrichtung in einer Offenstellung befindet, ist der Sperrteil mit mindestens einer Ausnehmung versehen.

Als günstiger als ein Sperrteil mit einer radialen Durchgangsbohrung hat sich ein Sperrteil erwiesen, das mindestens eine als Vertiefung in einer Mantelfläche des Sperrteils ausgebildete Ausnehmung umfaßt. Im Verhältnis zu einem Sperrteil mit einer radialen Durchgangsbohrung läßt sich durch ein Sperrteil mit einer solchen Vertiefung eine wesentlich schnellere Öffnungs- bzw. Verschlußzeit der Vorrichtung bei gleicher Drehzahl des Sperrelements erzielen.

Besonders günstig ist es, wenn das Sperrteil mindestens zwei als Vertiefung ausgebildete Ausnehmungen umfaßt, welche vorzugsweise auf einander gegenüberliegenden Seiten des Sperrteils angeordnet sind.

Bei einer bevorzugten Ausgestaltung der Erfindung weist die Vertiefung einen im wesentlichen kreissegmentförmigen, vorzugsweise im wesentlichen halbkreisförmigen, Querschnitt auf.

Ferner ist vorzugsweise vorgesehen, daß die Vertiefung die Drehachse des Sperrelements nicht schneidet. Auf diese Weise verbleibt im Bereich der Drehachse des Sperrelements ein Stegbereich, welcher den Fluiddurchgang in der Schließstellung der Vorrichtung sperrt.

Das Sperrteil weist eine besonders günstige Geometrie auf und ist besonders einfach herzustellen, wenn die Vertiefung eine im wesentlichen zylindermantelabschnittsförmige Begrenzungsfläche aufweist. Eine solche Vertiefung läßt sich in besonders einfacher Weise durch Ausfräsen aus einem zylindrischen Sperrteil-Rohling herstellen.

Um in der Offenstellung der Vorrichtung einen möglichst ungehinderten Fluiddurchgang von dem Fluideinlaß zu dem Fluidauslaß zu ermöglichen, erstreckt sich die Vertiefung vorteilhafterweise im wesentlichen senkrecht zu einer radialen Richtung des Sperrelements.

Ferner erstreckt sich die Vertiefung vorzugsweise im wesentlichen senkrecht zu der Drehachse des Sperrelements.

Ferner ist es von Vorteil, wenn die Drehachse des Sperrelements quer, vorzugsweise im wesentlichen senkrecht, zu der mittleren Strömungsrichtung des Fluids durch die Vorrichtung ausgerichtet ist.

In der Praxis hat es sich als günstig erwiesen, wenn das Sperrelement vorzugsweise mit einer Drehzahl im Bereich von ungefähr 100 U/min bis ungefähr 10.000 U/min, vorzugsweise im Bereich von ungefähr 300 U/min bis ungefähr 3.000 U/min, gedreht wird.

Um einen Fluidstrom zu erzeugen, der mit einer möglichst konstanten Frequenz pulsiert, ist es günstig, wenn die Vorrichtung einen Drehantrieb für das Sperrelement mit regelbarer Drehzahl umfaßt.

Der Drehantrieb für das Sperrelement kann insbesondere ein pneumatischer, hydraulischer oder elektrischer Drehantrieb sein.

Anspruch 13 ist auf eine Filtriervorrichtung gerichtet, welche eine erfindungsgemäße Vorrichtung zum Erzeugen eines pulsierenden Fluidstroms zum Reinigen, insbesondere zum Rückspülen, eines Filters umfaßt.

Beim Rückspülen von Filtergeweben erzeugt die erfindungsgemäße Vorrichtung an der Oberfläche der Filtergewebe Druckstöße, durch welche an dem Filtergewebe abgelagerte Partikel gelöst werden. Gleichzeitig wird, bedingt durch den durch die Vorrichtung vom Erzeugen eines pulsierenden Fluidstroms fliessenden Volumenstrom des Rückspülmediums, eine Strömung von der Sauberseite des Filters zu dessen Schmutzseite erreicht. Die durch die Druckspitzen gelösten Partikel werden auf diese Weise aus dem Filter ausgespült.

Anspruch 14 ist auf eine Reinigungsvorrichtung gerichtet, welche eine Einrichtung zum Erzeugen eines pulsierenden Reinigungsmittelstrahls umfaßt, die ihrerseits eine erfindungsgemäße Vorrichtung zum Erzeugen eines pulsierenden Fluidstroms umfaßt.

Durch die Verwendung eines pulsierenden Reinigungsmittelstrahls kann im Vergleich zu einem nicht pulsierenden Reinigungsmittelstrahl eine bessere Ablösewirkung von Schmutzpartikeln von einem zu reinigenden Werkstück erzielt werden.

Insbesondere kann ein solcher pulsierender Reinigungsmittelstrahl beim Abspritzen eines zu reinigenden Werkstücks, beim Injektionsflutwaschen (bei dem das zu reinigende Werkstücke in ein Reinigungsmittelbad eingetaucht und zugleich mit einem Reinigungsmittelstrahl beaufschlagt wird) oder beim Abblasen eines Werkstücks mit Druckluft eingesetzt werden.

Besonders geeignet ist die erfindungsgemäße Vorrichtung zum Erzeugen eines pulsierenden Fluidstroms zur Verwendung in einer Hochdruck-Spritzreinigungsvorrichtung, in welcher ein pulsierender Reinigungsmittelstrahl mit einem Spitzendruck von ungefähr 10 bar erzeugt wird.

Mit einem solchen pulsierenden Reinigungsmittelstrahl können insbesondere Späne aus Hohlräumen eines Werkstücks entfernt werden.

Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine Filtriervorrichtung mit einem Pulsventil zum Rückspülen eines Filters;
- Fig. 2: einen schematischen Längsschnitt durch das Pulsventil längs einer Drehachse eines Sperrelements des Pulsventils, in einer Schließstellung des Pulsventils;
- Fig. 3: einen schematischen Querschnitt durch das Pulsventil aus Fig. 2, längs der Linie 3-3 in Fig. 2;
- Fig. 4: einen schematischen Längsschnitt durch das Pulsventil entsprechend der Fig. 2, jedoch in einer Offenstellung des Pulsventils;
- Fig. 5: einen schematischen Querschnitt durch das Pulsventil aus Fig. 4 längs der Linie 5-5 in Fig. 4; und
- Fig. 6: eine Hochdruck-Spritzreinigungsvorrichtung mit einem Pulsventil.

Gleiche oder funktional äquivalente Elemente sind in allen Figuren mit denselben Bezugszeichen bezeichnet.

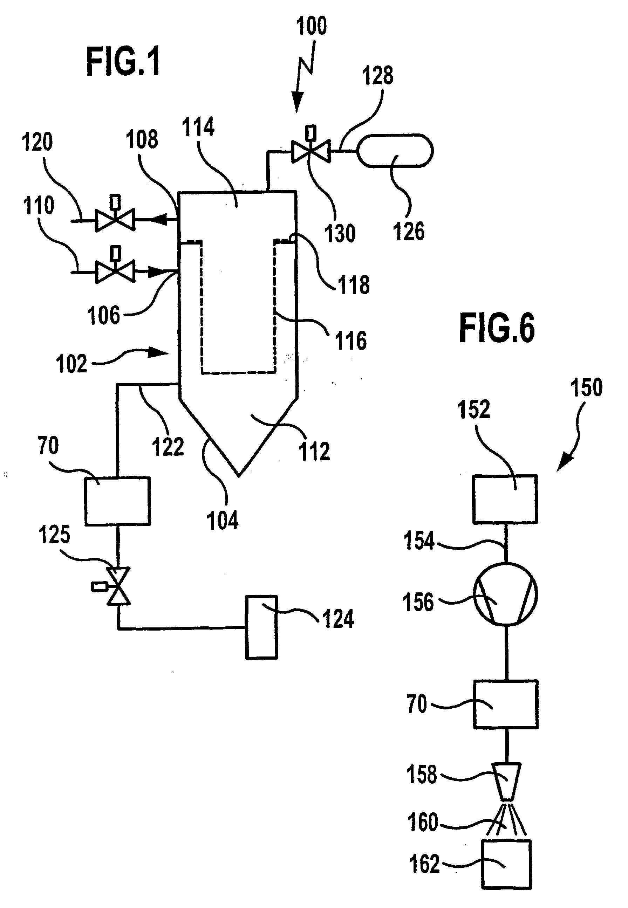

Eine in Fig. 1 schematisch dargestellte, als Ganzes mit 100 bezeichnete Filtriervorrichtung umfaßt einen Filter 102 mit einem Filtergehäuse 104, das einen Filtereinlaß 106 und einen Filterauslaß 108 aufweist, wobei am Filtereinlaß 106 eine Zuführleitung 110 angeschlossen ist, über die zu reinigende Schmutzflüssigkeit mit einstellbarem Druck in eine untere, die Schmutzseite 112 des Filters 102 bildende Kammer hineingepumpt werden kann. Die Schmutzseite 112 ist von der Filtratseite 114 über ein Filtermittel, das hier von einer Filterkerze 116 gebildet wird, die als kerzenförmiges Filtersieb ausgebildet ist und am Rand einer Bohrung in einer Trennplatte 118 aufgehängt ist, getrennt.

Im Filtrierbetrieb durchströmt die Flüssigkeit die Filterkerze 116 von außen nach innen und tritt über den Innenraum der Filterkerze 116 als Filtrat in die Filtratseite 114 des Filters 102 über; von dort tritt das Filtrat aus dem Filterauslaß 108 aus und wird über die absperrbare Abführleitung 120 einem Verbraucher zugeführt. Mit zunehmender Filtrierdauer lagern sich ausgefilterte Verunreinigungen an der Außenseite der Filterkerze 116 ab.

Um diese Ablagerungen von den Filterwänden zu lösen und aus der Schmutzseite 112 des Filters 102 abzuführen, ist in einer in die Schmutzseite 112 des Filters 102 mündenden Auslaßleitung 122, die zu einer Sammelkammer 124 führt und mittels eines Absperrventils 125 absperrbar ist, ein Pulsventil 70 angeordnet.

Mittels des Pulsventils 70 kann Flüssigkeit aus dem Innenraum des Filters 102 durch zyklisches Öffnen und Schließen der Auslaßleitung 122 in einem pulsierenden Strom mit einer bestimmten, einstellbaren Frequenz in die Sammelkammer 124 überführt werden.

In der Sammelkammer 124 kann anschließend durch Sedimentation und erhöhten Druck eine erste Trennung der schweren Verunreinigungen von der Flüssigkeit stattfinden. Alternativ hierzu kann die Sedimentation auch durch Einlegen einer Ruhephase während der Rückspülphase erfolgen, so daß dann in der Schmutzseite 112 des Filters 102 eine Vorabscheidung der schweren Bestandteile durch Sedimentation stattfindet.

Die Wirkung des Pulsventils 70 kann durch Druckluftbeaufschlagung der Schmutzseite 112 des Filters 102 noch gesteigert werden. Hierzu kann aus einem Druckspeicher 126 geeignetes Druckgas durch eine Zuführleitung 128 bei geöffnetem Absperrventil 130 der Filtratseite 114 des Filters 102 zugeführt werden. Hierdurch wird entweder das in der Filtratseite 114 enthaltene Filtrat durch die Filterwände im Gegenstrom zur Fltrierrichtung hindurchgedrückt oder eine Reinigung des Außenwand der Filterkerze 116 ausschließlich mit dem Druckgas aus dem Druckspeicher 126 bewirkt. Bei einem solchen Rückspülverfahren mit Druckgas werden die Zuführleitung 110 und die Abführleitung 120 geschlossen und das Absperrventil 125 geöffnet.

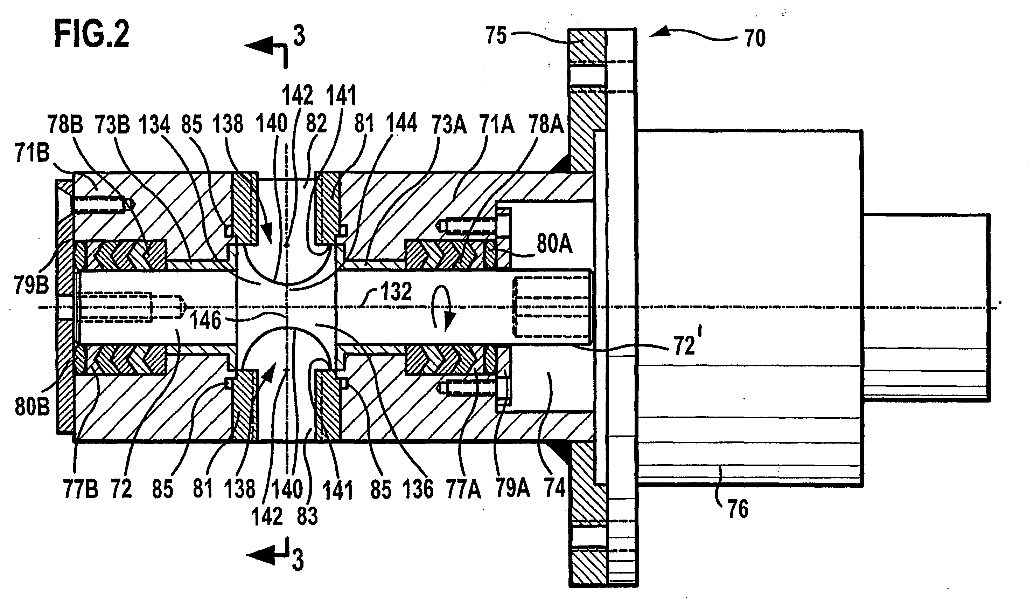

Der Aufbau des Pulsventils 70 ist in den Fig. 2 bis 5 dargestellt.

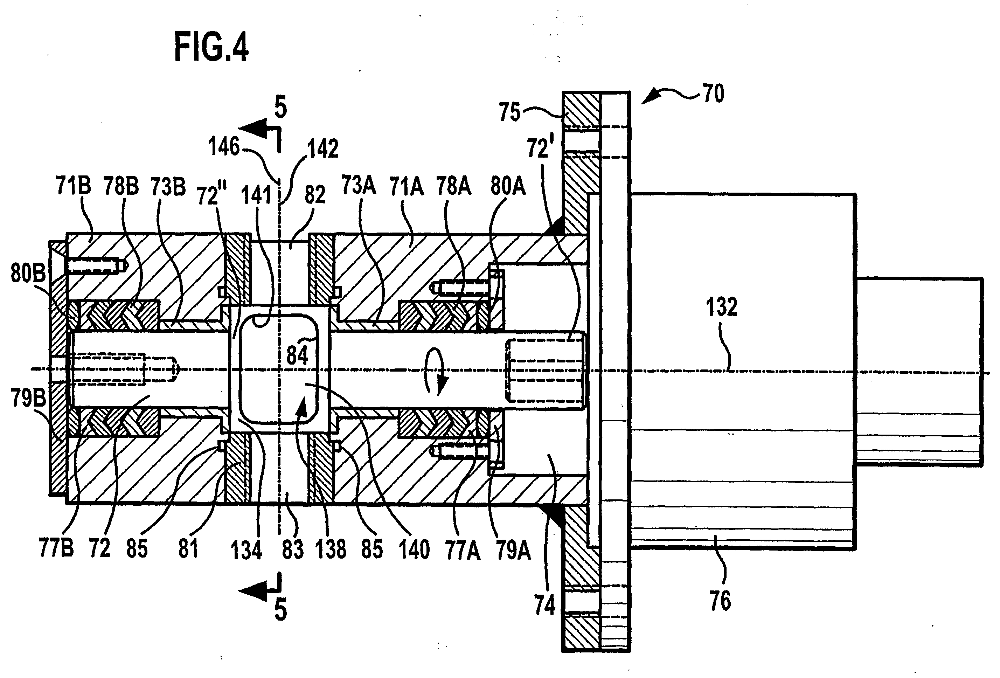

Wie aus den Fig. 2 und 4 zu ersehen ist, umfaßt das Pulsventil 70 ein zweiteiliges Gehäuse 71A, 71B, in welchem eine als Sperrelement dienende Welle 72 mittels Permagleitbuchsen 73A, 73B um eine Drehachse 132 drehbar gelagert ist. Das in den Fig. 2 und 4 rechts dargestellte Wellenende 72' liegt in einem Antriebskoppelraum 74 im Inneren des rechten Gehäuseteils 71A frei und ist dort drehfest mit der Antriebswelle eines an einem Gehäuseflansch 75 angeflanschten Drehantriebsmotors 76 verbunden.

Der Drehantriebsmotor 76 kann ein pneumatischer oder hydraulischer Drehantriebsmotor oder ein Elektromotor sein.

Jeweils zum Wellenende schließt sich an die Permagleitbuchsen 73A, 73B jeweils ein Paket 77A bzw. 77B mit mehreren Winkelringen 78A, 78B aus Polytetrafluorethylen an, die unter Zwischenlage von Dichtringen 80A, 80B und mittels Kopfplatten 79A, 79B in Position gehalten werden.

Zwischen den Gehäuseteilen 71A, 71B sitzt ein Ring 81 mit einem im wesentlichen zylindrischen Pulsventileinlaß 82 und einem fluchtend zu dem Pulsventileinlaß 82 angeordneten, im wesentlichen zylindrischen Pulsventilauslaß 83, wobei in den Pulsventileinlaß 82 und den Pulsventilauslaß 83 jeweils Anachlußleitungen eingeschraubt werden können.

Der Ring 81 ist mittels O-Ringen 85 abdichtend zwischen den Gehäuseteilen 71A, 71B eingesetzt, wobei diese über nicht gezeigte, versetzt zum Pulsventileinlaß 82 bzw. Pulsventilauslaß 83 angeordnete Zylinderschrauben aneinander befestigt sind.

Innerhalb des Rings 81 dreht sich ein Sperrteil 134 der Welle 72, der einen größeren Durchmesser als die angrenzenden Bereiche der Welle 72 aufweist.

Der Sperrteil 134 weist eine zylindrische, zu der Drehachse 132 koaxiale Mantelfläche 136 auf.

In der Mantelfläche 136 des Sperrteils 134 sind zwei einander diametral gegenüberliegende Vertiefungen 138 ausgebildet, welche jeweils von einer zylindermantelabschnittsförmigen Begrenzungsfläche 140 begrenzt werden, deren Zylinderachse 142 senkrecht zur Drehachse 132, senkrecht zur radialen Richtung des Sperrteils 134 und tangential zu der Mantelfläche 136 des Sperrteils 134 verläuft, und welche längs eines Randes 141 (siehe Fig. 4) auf der Mantelfläche 136 des Sperrteils 134 münden.

Die Vertiefungen 138 werden in dem Sperrteil 134 dadurch gebildet, daß aus dem zunächst vollzylindrischen Sperrteil 134 zwei zylinderabschnittsförmige Segmente mit den zueinander parallelen Achsen 142 ausgefräst werden, wobei der Zylinderradius kleiner ist als der Radius des Sperrteils 134, so daß zwischen den Vertiefungen 138 ein Stegbereich 144 stehen bleibt.

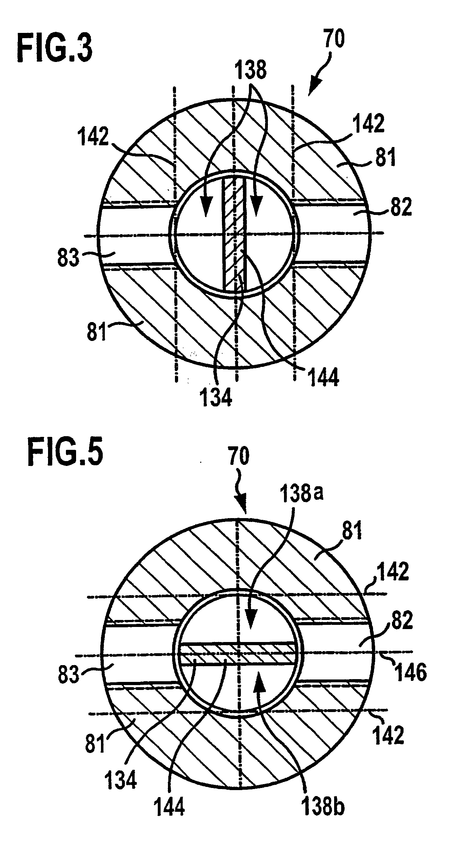

In der in den Fig. 2 und 3 dargestellten Schließstellung des Pulsventils 70 erstrecken sich die Vertiefungen 138 senkrecht zu der gemeinsamen Achse 142 des Pulsventileinlasses 82 und des Pulsventilauslasses 83, so daß der Durchgang vom Pulsventileinlaß 82 zum Pulsventilauslaß 83 durch den zwischen den Vertiefungen 138 verbleibenden Stegbereich 144 des Sperrteils 134 gesperrt ist.

Wenn sich die Welle 72 von der in den Fig. 2 und 3 dargestellten Schließstellung in die in den Fig. 4 und 5 dargestellte Offenstellung des Pulsventils 70 weiter gedreht hat, erstrecken sich die Vertiefungen 138 parallel zu der gemeinsamen Achse 146 des Pulsventileinlasses 82 und des Pulsventilauslasses 83. Die obere Vertiefung 138a und die untere Vertiefung 138b münden in dieser Stellung sowohl in den Pulsventileinlaß 82 als auch in den Pulsventilauslaß 83, so daß in dieser Offenstellung ein Fluid von dem Pulsventileinlaß 82 sowohl durch die obere Vertiefung 138a also auch durch die untere Vertiefung 138b zu dem Pulsventilaisslaß 83 gelangen kann.

In den Winkelstellungen der Welle 72, die zwischen der in den Fig. 2 und 3 dargestellten Schließstellung und der in den Fig. 4 und 5 dargestellten Offenstellung des Pulsventils 70 liegen, ist der Durchgang zwischen dem Pulsventileinlaß 82 und dem Pulsventilauslaß 83 nur teilweise geöffnet oder geschlossen.

Durch Drehen der Welle 72 wird das Pulsventil 70 somit zyklisch von dem Schließzustand in den Offenzustand und wieder zurück in den Schließaustand überführt, so daß mittels des Pulsventils 70 ein pulsierender Fluidstrom durch das Pulsventil 70 erzeugt wird.

Durch das intermittierende Öffnen des Pulsventils 70 erfolgt der Abfluß aus dem Filter 102 schubweise. Durch die beim Schließen des Pulsventils 70 erzeugten Druckspitzen auf der Schmutzseite 112 des Filters 102 werden die Ablagerungen an der Filterwand der Filterkerze 116 gelöst und anschließend durch die Auslaßleitung 122 ausgespült.

Eine weitere Verwendungsmöglichkeit für das Pulsventil 70 ist in Fig. 6 dargestellt.

Fig. 6 zeigt eine schematische Darstellung einer Hochdruck-Spritzreinigungsvorrichtung 150, welche ein Reinigungsmittelreservoir 152 umfaßt, aus welchem ein flüssiges Reinigungsmittel durch eine Zuführleitung 154 über eine Hochdruckpumpe 156 und ein Pulsventil 70 der vorstehend beschriebenen Art einer Hochdruckdüse 158 zugeführt wird.

Mittels des Pulsventils 70 wird an der Hochdruckdüse 158 ein pulsierender Reinigungsmittelstrahl 160 erzeugt, welcher zum Ablösen von Schmutzpartikeln von einem zu reinigenden Werkstück 162 eingesetzt wird.

Aufgrund der Pulsation des Reinigungsmittelstrahls 160 wird eine besonders gute Ablösewirkung von Schmutzpartikeln von dem Werkstück 162 erzielt.

## Patentansprüche

1. Vorrichtung zum Erzeugen eines pulsierenden Fluidstroms, umfassend einen Fluideinlaß (82), einen Fluidauslaß (83) und ein zwischen dem Fluideinlaß (82) und dem Fluidauslaß (83) angeordnetes, um eine Drehachse (132) drehbares Sperrelement (72), das einen Sperrteil (134) aufweist, welcher einen Fluiddurchgang von dem Fluideinlaß (82) zu dem Fluidauslaß (83) zyklisch schließt und freigibt,
**dadurch gekennzeichnet, daß**
der Fluideinlaß (82) und der Fluidauslaß (83) sich längs einer gemeinsamen Achse (142) erstrecken und die Drehachse (132) des Sperrelements (72) im wesentlichen senkrecht zu der gemeinsamen Achse (142) des Fluideinlasses (82) und des Fluidauslasses (83) ausgerichtet ist, wobei der Sperrteil (134) mindestens eine als Vertiefung (138) in einer Mantelfläche (136) des Sperrteils (134) ausgebildete Ausnehmung umfaßt.

2. Vorrichtung nach Anspruch 1, **dadurch gekennzeichnet, daß** das Sperrelement (72) als eine drehbar gelagerte Welle ausgebildet ist.

3. Vorrichtung nach einem der Ansprüche 1 oder 2, **dadurch gekennzeichnet, daß** das Sperrelement (72) einen im wesentlichen zylindrischen Sperrteil (134) aufweist.

4. Vorrichtung nach einem der Ansprüche 1 bis 3, **dadurch gekennzeichnet, daß** die Vertiefung (138) einen im wesentlichen kreissegmentförmigen Querschnitt aufweist.

5. Vorrichtung nach Anspruch 4, **dadurch gekennzeichnet, daß** die Vertiefung (138) einen im wesentlichen halbkreisförmigen Querschnitt aufweist.

6. Vorrichtung nach einem der Ansprüche 1 bis 5, **dadurch gekennzeichnet, daß** die Vertiefung (138) die Drehachse (132) des Sperrelements (72) nicht schneidet.

7. Vorrichtung nach einem der Ansprüche 1 bis 6, **dadurch gekennzeichnet, daß** die Vertiefung (138) eine im wesentlichen zylindermantelabschnittsförmige Begrenzungsfläche (140) aufweist.

8. Vorrichtung nach einem der Ansprüche 1 bis 7, **dadurch gekennzeichnet, daß** sich die Vertiefung (138) im wesentlichen senkrecht zu einer radialen Richtung des Sperrelements (72) erstreckt.

9. Vorrichtung nach einem der Ansprüche 1 bis 8, **dadurch gekennzeichnet, daß** die Drehachse (132) des Sperrelements (72) quer, vorzugsweise im wesentlichen senkrecht, zu der mittleren Strömungsrichtung (142) des Fluids durch die Vorrichtung (70) ausgerichtet ist.

10. Vorrichtung nach einem der Ansprüche 1 bis 9, **dadurch gekennzeichnet, daß** das Sperrelement (72) mit einer Drehzahl im Bereich von ungefähr 100 U/min bis ungefähr 10.000 U/min, vorzugsweise im Bereich von ungefähr 300 U/min bis ungefähr 3.000 U/min, drehbar ist.

11. Vorrichtung nach einem der Ansprüche 1 bis 10, **dadurch gekennzeichnet, daß** die Vorrichtung (70) einen Drehantrieb (76) für das Sperrelement (72) mit regelbarer Drehzahl umfaßt.

12. Vorrichtung nach einem der Ansprüche 1 bis 11, **dadurch gekennzeichnet, daß** die Vorrichtung (70) einen pneumatischen, hydraulischen oder elektrischen Drehantrieb (76) für das Sperrelement (72) umfaßt.

13. Filtriervorrichtung, umfassend eine Vorrichtung (100) nach einem der Ansprüche 1 bis 12 zum Reinigen, insbesondere zum Rückspülen, eines Filters (102).

14. Reinigungsvorrichtung, umfassend eine Einrichtung zum Erzeugen eines pulsierenden Reinigungsmittelstrahls (160), welche eine Vorrichtung (70) nach einem der Ansprüche 1 bis 12 umfaßt.

## Claims

1. A device for producing a pulsating stream of fluid comprising a fluid inlet (82), a fluid outlet (83) and a blocking element (72) which is arranged between the fluid inlet (82) and the fluid outlet (83) and is rotatable about a rotational axis (132) and which comprises a blocking member (134) that cyclically closes and opens a fluid passage between the fluid inlet (82) and the fluid outlet (83),
**characterized in that**
the fluid inlet (82) and the fluid outlet (83) extend along a common axis (142) and the rotational axis (132) of the blocking element (72) is aligned substantially perpendicularly to the common axis (142) of the fluid inlet (82) and the fluid outlet (83), wherein the blocking member (134) comprises at least one recess in the form of a depression (138) in the outer surface (136) of the blocking member (134).

2. A device in accordance with Claim 1, **characterized in that** the blocking element (72) is in the form of a rotatably mounted shaft.

3. A device in accordance with either of the Claims 1 or 2, **characterized in that** the blocking element (72) comprises a substantially cylindrical blocking member (134).

4. A device in accordance with any of the Claims 1 to 3, **characterized in that** the cross section of the depression (138) is substantially in the form of a segment of a circle.

5. A device in accordance with Claim 4, **characterized in that** the depression (138) has a substantially semicircular cross section.

6. A device in accordance with any of the Claims 1 to 5, **characterized in that** the depression (138) does not intersect the rotational axis (132) of the blocking element (72).

7. A device in accordance with any of the Claims 1 to 6, **characterized in that** the depression (138) has a bounding surface (140) which is substantially in the form of a section of a cylinder.

8. A device in accordance with any of the Claims 1 to 7, **characterized in that** the depression (138) extends substantially perpendicularly to a radial direction of the blocking element (72).

9. A device in accordance with any of the Claims 1 to 8, **characterized in that** the rotational axis (132) of the blocking element (72) is aligned transversely, preferably substantially perpendicularly, to the median direction of flow (142) of the fluid through the device (70).

10. A device in accordance with any of the Claims 1 to 9, **characterized in that** the blocking element (72) is rotatable at a rotational speed within the range of approximately 100 rpm to approximately 10,000 rpm, preferably within the range of approximately 300 rpm to approximately 3,000 rpm.

11. A device in accordance with any of the Claims 1 to 10, **characterized in that** the device (70) comprises a rotary drive (76) for the blocking element (72) having an adjustable rotational speed.

12. A device in accordance with any of the Claims 1 to 11, **characterized in that** the device (70) comprises a pneumatic, hydraulic or electrical rotary drive (76) for the blocking element (72).

13. A filter device comprising a device (100) in accordance with any of the Claims 1 to 12 for cleaning, in particular for back-washing a filter (102).

14. A cleaning device comprising a mechanism for producing a pulsating jet of cleaning agent (160) which comprises a device (70) in accordance with any of the Claims 1 to 12.

## Revendications

1. Dispositif servant à générer un flux pulsé de fluide, comprenant une entrée de fluide (82), une sortie de fluide (83) et un élément d'arrêt (72) disposé entre l'entrée de fluide (82) et la sortie de fluide (83) et pouvant tourner autour d'un axe de rotation (132), lequel élément d'arrêt présente une pièce d'arrêt (134) qui, de manière cyclique, ferme et libère un passage de fluide, depuis l'entrée de fluide (82) jusqu'à la sortie de fluide (83),
**caractérisé**
**en ce que** l'entrée de fluide (82) et la sortie de fluide (83) s'étendent le long d'un axe commun (142), et l'axe de rotation (132) de l'élément d'arrêt (72) est orienté pratiquement de façon perpendiculaire à l'axe commun (142) de l'entrée de fluide (82) et de la sortie de fluide (83),
où la pièce d'arrêt (134) comprend au moins un évidement configuré comme une cavité (138) dans une surface (136) de la pièce d'arrêt (134).

2. Dispositif selon la revendication 1, **caractérisé en ce que** l'élément d'arrêt (72) est configuré comme un arbre monté en rotation.

3. Dispositif selon la revendication 1 ou 2, **caractérisé en ce que** l'élément d'arrêt (72) présente une pièce d'arrêt (134) pratiquement cylindrique.

4. Dispositif selon l'une quelconque des revendications 1 à 3, **caractérisé en ce que** la cavité (138) présente une section pratiquement en forme de segment de cercle.

5. Dispositif selon la revendication 4, **caractérisé en ce que** la cavité (138) présente une section pratiquement en forme de demi-cercle.

6. Dispositif selon l'une quelconque des revendications 1 à 5, **caractérisé en ce que** la cavité (138) ne coupe pas l'axe de rotation (132) de l'élément d'arrêt (72).

7. Dispositif selon l'une quelconque des revendications 1 à 6, **caractérisé en ce que** la cavité (138) présente une périphérie (140) ayant pratiquement la forme d'une partie du corps du cylindre.

8. Dispositif selon l'une quelconque des revendications 1 à 7, **caractérisé en ce que** la cavité (138) s'étend pratiquement de façon perpendiculaire à une direction radiale de l'élément d'arrêt (72).

9. Dispositif selon l'une quelconque des revendications 1 à 8, **caractérisé en ce que** l'axe de rotation (132) de l'élément d'arrêt (72) est orienté de façon transversale, de préférence pratiquement de manière perpendiculaire au sens d'écoulement central (142) du fluide, à travers le dispositif (70).

10. Dispositif selon l'une quelconque des revendications 1 à 9, **caractérisé en ce que** l'élément d'arrêt (72) peut tourner à une vitesse de rotation dont la plage est comprise entre environ 100 tours/mn et environ 10.000 tours/mn, de préférence dans la plage comprise entre environ 300 tours/mn et environ 3000 tours/mn.

11. Dispositif selon l'une quelconque des revendications 1 à 10, **caractérisé en ce que** le dispositif (70) comprend, pour l'élément d'arrêt (72), une commande d'entraînement (76) à vitesse de rotation réglable.

12. Dispositif selon l'une quelconque des revendications 1 à 11, **caractérisé en ce que** le dispositif (70) comprend, pour l'élément d'arrêt (72), une commande d'entraînement (76) pneumatique, hydraulique ou électrique.

13. Dispositif de filtration comprenant un dispositif (100) selon l'une quelconque des revendications 1 à 12, servant au nettoyage, en particulier au balayage de retour d'un filtre (102).

14. Dispositif de nettoyage comprenant un dispositif servant à générer un jet pulsé (160) d'un produit nettoyant, lequel dispositif de nettoyage comprend un dispositif (70) selon l'une quelconque des revendications 1 à 12.
